# EUROPÄISCHE PATENTSCHRIFT

(11) **EP 1 740 859 B1**
(45) Veröffentlichungstag und Bekanntmachung des Hinweises auf die Patenterteilung: **02.12.2009**
(21) Anmeldenummer: 05741359.3
(22) Anmeldetag: 28.04.2005
(51) Int. Cl.: F16K 3/02, F16K 3/314, F16K 31/50

(54) **ABSPERRSCHIEBER**
GATE VALVE
ROBINET-VANNE

(30) Priorität: 29.04.2004 DE 202004006831 U
(43) Veröffentlichungstag der Anmeldung: 10.01.2007
(73) Patentinhaber: Düker GmbH & Co. KGaA, 97753 Karlstadt (DE)
(72) Erfinder: WERNER, Rüdiger, 63768 Hösbach (DE)
(74) Vertreter: Hoeger, Stellrecht & Partner Patentanwälte
(86) Internationale Anmeldenummer: PCT/EP2005/004593
(87) Internationale Veröffentlichungsnummer: WO 2005/106299

(56) Entgegenhaltungen:
- AT-B- 352 491
- DE-U- 1 846 855
- DE-U1- 9 217 734
- DE-U1- 20 315 221
- US-A- 5 657 961

## Beschreibung

Die Erfindung betrifft einen Absperrschieber mit einem einen eine Eintrittsöffnung mit einer Austrittsöffnung für ein in einer Strömungsrichtung strömendes Fluid verbindenden Durchgang aufweisenden Gehäuse, insbesondere zumindest teilweise aus Gusseisen, einem zwischen einer Sperrstellung, in der der Durchgang gesperrt ist, und einer Freigabestellung, in der der Durchgang freigegeben ist, bewegbaren Verschlusskolben sowie einer mittels einer Lageranordnung in dem Gehäuse um eine quer zur Strömungsrichtung verlaufende Spindelachse drehbar gelagerten und an den Verschlusskolben koppelbaren Spindel, wobei die Lageranordnung mehrteilig ausgeführt ist.

Ein derartiger Absperrschieber ist beispielsweise aus der DE-U-92 17 734 bekannt.

Derartige Absperrschieber werden beispielsweise in Leitungssystemen für die Trinkwasserversorgung benötigt, um Leitungsabschnitte für die Durchführung von Reparaturarbeiten absperren zu können. Dazu wird der Verschlusskolben in einer quer zur Strömungsrichtung verlaufenden Richtung von der Freigabestellung in die Sperrstellung bewegt, um so eine Durchströmung des zu reparierenden Abschnittes des Leitungssystems zu verhindern. Zu diesem Zweck ist der Verschlusskolben an eine in einem sich quer zur Strömungsrichtung erstreckenden Ansatz des Schiebergehäuses gelagerte Spindel gekoppelt. Durch Drehung der Spindel um die Spindelachse kann der Verschlusskolben von der Freigabestellung in die Sperrstellung bewegt werden.

Dabei kommen einerseits sogenannte steigende Spindeln zum Einsatz, bei denen durch Drehung der Spindel um die Spindelachse eine axiale Bewegung der Spindel selbst bewirkt wird.

Andererseits kommen, wie bei der DE-U-92 17 734, nichtsteigende Spindeln zum Einsatz, bei denen die Spindel selbst in Richtung der Spindelachse nicht bezüglich des Gehäuses bewegbar ist und durch Drehung der Spindel um die Spindelachse lediglich eine Verschiebung des Verschlusskolbens in Richtung der Spindelachse verursacht wird, indem ein Außengewinde der Spindel in ein Innengewinde des Verschlusskolbens eingreift, so dass eine Drehbewegung um die Spindelachse in eine translatorische Bewegung des Verschlusskolbens in Richtung der Spindelachse umgesetzt werden kann.

Bei beiden Ausführungsformen müssen für die Herstellung herkömmlicher Absperrschieber Montageöffnungen in dem Gehäuse vorgesehen sein, durch die der Verschlusskolben eingebracht werden kann. Das bedingt einerseits einen montagetechnischen Mehraufwand und andererseits ein zusätzliches Risiko für Leckbildungen.

Zur Lösung dieses Problems wird in der WO 99/45301 ein Absperrschieber der eingangs beschriebenen Art angegeben, bei dem der Verschlusskolben mehrstückig ausgeführt ist, wobei die einzelnen Bauelemente des Verschlusskolbens in Strömungsrichtung hintereinander angeordnet sind. Die bekannten Verschlusskolben können in einem einstückigen Gehäuse montiert werden, in dem die einzelnen Verschlusskolbenbauelemente in den Durchgang eingebracht, ausgerichtet und anschließend mit der Spindel verbunden werden.

Allerdings wird bei den bekannten Absperrschiebern immer noch eine beachtliche Leckbildung beobachter, wenn diese Schieber mit hohem Druck beaufschlagt werden.

Angesichts dieser Probleme im Stand der Technik liegt der Erfindung die Aufgabe zugrunde, einfach montierbare und dennoch dichte Absperrschieber bereitzustellen.

Diese Aufgabe wird durch einen Absperrschieber der eingangs beschriebenen Art erfindungsgemäß dadurch gelöst, dass die Lageranordnung zwei oder mehr in Richtung des Spindelachse derart hintereinander angeordnete Bauelemente aufweist, dass eine senkrecht zur Spindelachse verlaufende und nur eines der Bauelemente schneidende Ebene existiert, und dass die zwei Bauelemente der Lageranordnung jeweils mindestens eine quer zur Spindelachse verlaufende und an eine Gegenfläche des Gehäuses anlegbare Anlagefläche aufweisen, wobei die Anlageflächen der Bauelemente einander zugewandt sind, und dass die zwei Bauelemente zur Befestigung der Lageranordnung an dem Gehäuse die die Gegenflächen aufweisenden Gehäuseteile zwischen den Anlageflächen einklemmen.

Weitere vorteilhafte Ausführungsformen sind Gegenstand der Unteransprüche.

Der Vorteil der erfindungsgemäßen mehrteilig ausgeführten Lageranordnung ist, dass diese ohne zusätzliche Bearbeitung des Gehäuses zur Bereitstellung von Gewinden oder dergleichen an dem Gehäuse befestigt werden kann.

Dazu weisen mindestens zwei Elemente der Lageranordnung jeweils mindestens eine quer, vorzugsweise senkrecht zur Spindelachse verlaufende und gegebenenfalls unter Zwischenschaltung eines Dichtungselementes, wie etwa eines Dichtrings, eine Gegenfläche des Gehäuses anlegbare Anlagefläche auf, wobei die Anlageflächen der Bauelemente einander zugewandt sind.

Dementsprechend werden entsprechende Gehäuseteile zwischen den Anlageflächen der Bauelemente der Lageranordnung eingeklemmt, um so eine sichere Befestigung der Lageranordnung an dem Gehäuse zu erreichen. Die Gegenflächen des Gehäuses können in einer besonders bevorzugten Ausführungsform der Erfindung von einem die Spindelachse umlaufenden Haltebund des Gehäuses gebildet sein. Ein derartiger Haltebund kann einstückig mit dem Gehäuse ausgeführt sein.

Eine besonders zuverlässige Dichtwirkung lässt sich bei einstückiger Ausführung des Haltebundes mit dem Gehäuse erreichen, wenn die Gegenflächen des Haltebundes etwa parallel zueinander und senkrecht zur Spindelachse ausgeführt sind, weil auf diese Weise Abstandstoleranzen in einem akzeptablen Bereich eingestellt werden können, selbst wenn das Gehäuse mit dem einstückig damit ausgeführten Haltebund gegossen wird. Im Hinblick auf eine einfache und zuverlässige Montage einer erfindungsgemäß ausgeführten Lageranordnung hat es sich als zweckmäßig erwiesen, wenn mindestens ein Bauelement der Lageranordnung bezüglich Drehungen um die Spindelachse verdrehsicher an dem Gehäuse gehalten ist. Dadurch kann zuverlässig verhindert werden, dass dieses Bauelement der Lageranordnung bei Drehungen der Spindel um die Spindelachse bezüglich dem Gehäuse verdreht und dadurch gegebenenfalls . gelockert wird.

Zum Erhalt einer einfach montierbaren Lageranordnung hat es sich weiter als zweckmäßig erwiesen, wenn mindestens ein Bauelement der Lageranordnung, insbesondere das dem Verschlusskolben zugewandte Bauelement der Lageranordnung eine den Haltebund durchsetzende und von der Spindel durchsetzte sowie mit einem Innengewinde ausgestattete, vorzugsweise einstückig mit der entsprechenden Anlagefläche ausgeführte Schraubhülse aufweist und das andere Bauelement eine weitere, den Haltebund durchsetzende und von der Spindel durchsetzte, sowie mit einem dem Innengewinde entsprechenden Außengewinde ausgestattete, vorzugsweise etwa einstückig mit der entsprechenden Anlagefläche ausgeführte Schraubhülse aufweist. Die beiden so ausgeführten Bauelemente der Lageranordnung können durch Drehung um die Spindelachse einfach zusammengeschraubt werden, wobei eine Montageerleichterung erreicht werden kann, wenn eines der Bauelemente der Lageranordnung bezüglich der Drehungen um die Spindelachse verdrehsicher an dem Gehäuse gehalten ist.

Zur Lagerung einer nichtsteigenden Spindel ist es besonders zweckmäßig, wenn die zusammengeschraubten Bauelemente der Lageranordnung einerseits eine nach außen offene, die Spindelachse umlaufende und zum Aufnehmen des Haltebundes des Gehäuses ausgelegte Nut begrenzt und andererseits eine die Spindelachse umlaufende und in Richtung auf die Spindelachse offene sowie zum Aufnehmen eines vorzugsweise einstückig mit der Spindelachse ausgeführten Lagerbundes der Spindel ausgelegte weitere Nut begrenzt. Durch Zusammenschrauben der einzelnen Bauelemente der Lageranordnung wird so einerseits eine sichere Befestigung der Lageranordnung am Gehäuse und andererseits eine sichere Lagerung der Spindel in der Lageranordnung erreicht.

Die erforderliche Dichtwirkung bei einer mehrteilig ausgeführten Lageranordnung kann sichergestellt werden, wenn mindestens ein Bauelement der Lageranordnung mindestens eine die Spindelachse umlaufende, in Richtung auf die Spindelachse offene und zum Aufnehmen eines an die Spindel anlegbaren Dichtrings ausgelegte Nut aufweist.

Die Montage einer erfindungsgemäß ausgeführten Lageranordnung kann erleichtert werden, wenn dem dem Verschlusskolben zugewandten Bauelement der Lageranordnung eine Arretierungseinrichtung, wie etwa ein Sprengring, zum Arretieren dieses Bauelementes bezüglich Bewegungen in Richtung der Spindelachse zugeordnet ist. Bei einer derartigen Ausführung einer erfindungsgemäß gestalteten Lageranordnung kann zunächst das dem Verschlusskolben zugewandte Bauelement der Lageranordnung an dem Gehäuse zweckmäßigeweise verdrehsicher arretiert werden und dann das andere Bauelement der Lageranordnung in dieses vorzugsweise bereits verdrehsicher an dem Gehäuse befestigte Bauelement eingeschraubt werden. Wie eingangs bereits erläutert, erlaubt die erfindungsgemäße Ausführung eines Absperrschiebers eine einstückige und/oder unbearbeitete Ausführung des Gehäuses.

Die Ausbildung des Verschlusskolbens geht auf die Erkenntnis zurück, dass die bei den bekannten Absperrschiebern mit mehrteiligen Verschlusskolben beobachtete Leckbildung in erster Linie darauf zurückzuführen ist, dass ein ausreichender Anpressdruck in Richtung der Spindelachse bei Verschlusskolben mit in einer quer zur Spindelachse verlaufenden Richtung gegeneinander versetzt angeordneten Bauelemente nicht erzeugbar ist.

Bei den erfindungsgemäßen Absperrschiebern kann die durch Drehung der Spindel durch die Spindelachse erzeugte Axialkraft als zusätzliche Dichtkraft für die einzelnen Bauelemente des Verschlusskolbens und/oder der Lageranordnung eingesetzt werden, weil die einzelnen Bauelemente in Richtung der Spindelachse, also in Kraftrichtung hintereinander angeordnet sind. Dadurch wird einerseits eine einfache Montage und andererseits ein hohes Maß an Dichtigkeit sichergestellt.

Bei einer besonders einfachen Ausführungsform der Erfindung sind zwei Bauelemente des Verschlusskolbens längs einer senkrecht zur Spindelachse verlaufenden Trennebene voneinander getrennt. Die einzelnen Bauelemente des Verschlusskolbens können dabei etwa halbkreisförmig ausgeführt sein, wobei eine Dichtwirkung längs der Trennebene durch die von der Spindel ausgeübte Axialkraft verstärkt wird. Die Verbindung der beiden längs der Trennebene voneinander getrennten Bauelemente erfolgt zweckmäßigerweise mit Hilfe eines bei einer bevorzugten Ausführungsform der Erfindung hülsenförmigen Verbindungselementes, welches etwa koaxial zur Spindelachse verlaufende Ausnehmungen der beiden Bauelemente, insbesondere des Verschlusskolbens, zumindest abschnittsweise durchsetzt. Dabei kann ein Ende, insbesondere das der Lageranordnung zugewandte Ende, des Verbindungselementes an die Spindelachse gekoppelt sein, während das andere Ende des Verbindungselementes an einer der Lageranordnung abgewandten Anlagefläche des der Lageranordnung abgewandten Bauelements des Verschlusskolbens anliegt, wobei diese Anlagefläche zweckmäßigerweise etwa senkrecht zur Spindelachse verläuft und das Verbindungselement an seinem der Lageranordnung abgewandten Ende flanschartig erweitert ist. Ein so ausgeführtes und an die Spindel gekoppeltes Verbindungselement kann bei einer Bewegung von der Sperrstellung in die Freigabestellung beide Bauelemente des Verschlusskolbens mitführen, indem das flanschartig erweiterte Ende des Verbindungselementes In Anlage an die Anlagefläche des der Lageranordnung abgewandten Bauelementes gelangt und dieses, sowie das der Lageranordnung zugewandte Bauelement des Verschlusskolbens mitführt.

Die Kopplung des Verbindungselementes an die Spindel erfolgt zweckmäßigerweise über ein in die das der Lageranordnung zugewandte Bauelement durchsetzende Ausnehmung einsetzbares und einerseits form- und/oder kraftschlüssig an das Verbindungselement und andererseits form- und/oder kraftschlüssig an die Spindel koppelbares Kopplungselement, wobei das Kopplungselement über eine die Spindelachse umlaufenden Sprengring an das Verbindungselement koppelbar ist. Die Kopplung an die Spindel erfolgt zweckmäßigerweise über ein einem Außengewinde der vorzugsweise in axialer Richtung bezüglich dem Gehäuse feststehend gelagerten Spindel entsprechendes Innengewinde des Kopplungselementes. Bei dieser Ausführungsform der Erfindung kann eine Drehung der Spindel um die Spindelachse in eine axiale Bewegung des Kopplungselementes, des daran gekoppelten Verbindungselementes und damit auch der Bauelemente des Verschlusskolbens umgesetzt werden. Es handelt sich hier um eine nichtsteigende Spindel.

Bei einer Bewegung von der Freigabestellung in die Sperrstellung kann eine die Dichtwirkung erhöhende Axialkraft auf die Bauelemente des Verschlusskolbens ausgeübt werden, wenn das Kopplungselement mindestens eine an einer Stirnfläche des Verbindungselementes und/oder eine vorzugsweise etwa senkrecht zur Spindelachse verlaufende Begrenzungsfläche des der Lageranordnung zugewandten Bauelementes des Verschlusskolbens anlegbar und vorzugsweise in einer senkrecht zur Spindelachse verlaufenden Anlagefläche aufweist.

Bei der erfindungsgemäßen Ausführung des mehrteiligen Verschlusskolbens ist eine Bearbeitung der Bauelemente des Verschlusskolbens zur Bereitstellung von Gewinden oder dergleichen nicht erforderlich. Daher können die Bauelemente des Verschlusskolbens zumindest teilweise, bei einer besonders bevorzugten Ausführungsform der Erfindung vollständig gummiert sein, um die gewünschte Dichtwirkung sicherzustellen, indem die Bauelemente des Verschlusskolbens in Anlage an entsprechende Dichtflächen des Gehäuses gedrängt werden.

Nachstehend wird die Erfindung unter Bezugnahme auf die Zeichnung, auf die hinsichtlich aller erfindungswesentlichen und in der Beschreibung nicht näher dargestellten Einzelheiten ausdrücklich verwiesen wird, erläutert. In der Zeichnung zeigt:
- Fig. 1: eine perspektivische Darstellung eines erfindungsgemäßen Absperrschiebers;
- Fig. 2: eine Schnittdarstellung des in Fig. 1 dargestellten Absperr- schiebers in einer senkrecht zur Strömungsrichtung verlaufen- den Schnittebene und
- Fig. 3: eine perspektivische Schnittdarstellung einer erfindungsgemäß ausgeführten Lageranordnung eines Absperrschiebers.

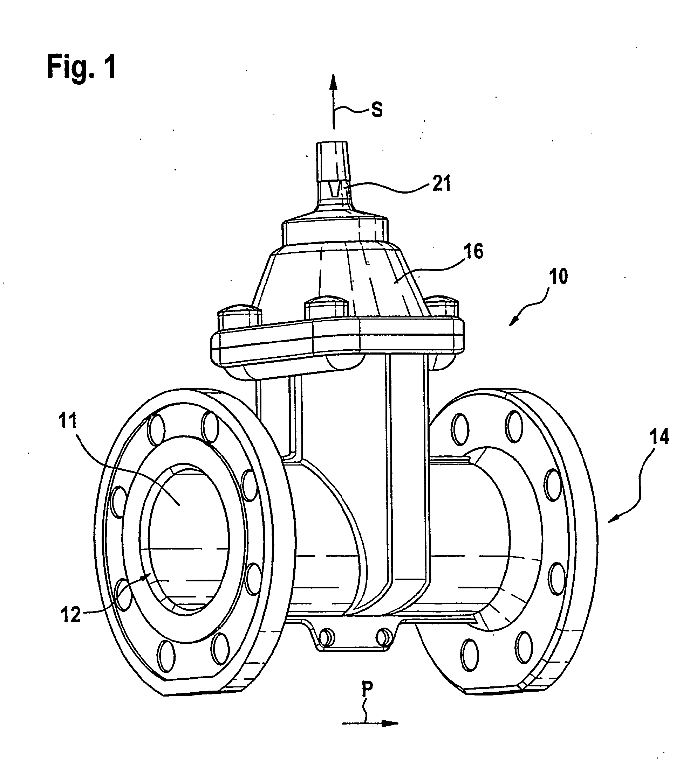

In Fig. 1 ist das Gehäuse 10 eines erfindungsgemäß ausgeführten Absperrschiebers erkennbar. Dieses Gehäuse umfasst einen eine Eintrittsöffnung 12 mit einer Austrittsöffnung 14 verbindenden Durchgang 11 für ein in einer Strömungsrichtung P strömendes Fluid. Ferner umfasst das Gehäuse 10 einen sich quer zur Strömungsrichtung P erstreckenden Ansatz zur Aufnahme eines mit Hilfe einer Spindel 21 zwischen einer Sperrstellung und einer Freigabestellung bewegbaren Verschlusskolbens. Die Bewegung des Verschlusskolbens mittels der sich senkrecht zur Strömungsrichtung P erstreckenden Spindel 21 erfolgt längs der senkrecht zur Strömungsrichtung verlaufenden Spindelachse S.

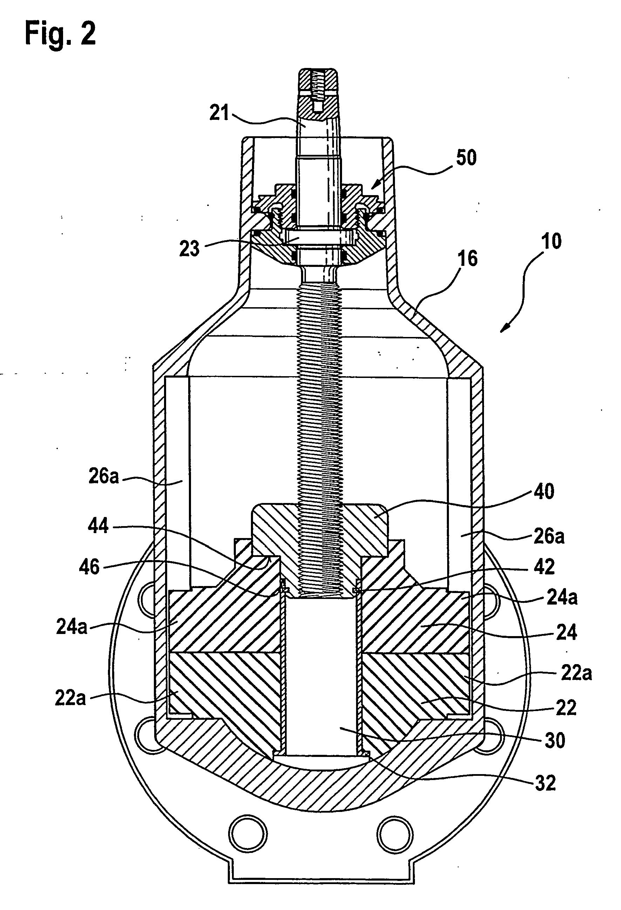

Bei der in Fig. 2 dargestellten Ausführungsform ist der insgesamt mit 20 bezeichnete Verschlusskolben zweiteilig ausgeführt und weist zwei in Richtung der Spindelachse S hintereinander angeordnete Bauelemente 22 und 24 auf, welche längs einer senkrecht zur Spindelachse S verlaufenden Trennebene voneinander getrennt sind. Jedes der Bauelemente 22 und 24 des Verschlusskolbens 20 ist von einer koaxial zur Spindelachse S verlaufenden Ausnehmung durchsetzt, wobei in den die Bauelemente 22 und 24 durchsetzenden Ausnehmungen ein insgesamt hülsen- bzw. etwa kreiszylindermantelförmiges Verbindungselement 30 aufgenommen ist. Das Verbindungselement 30 ist an seinem einer Lageranordnung 50 für die Spindel 21 abgewandten Ende 32 flanschartig erweitert und liegt mit diesem flanschartig erweiterten Ende 32 an einer Anlagefläche des der Lageranordnung 50 abgewandten Bauelementes 22 des Verschlußkolbens 20 an. In das der Lageranordnung 50 zugewandte Bauelement 24 des Verschlußkolbens ist ein Kopplungselement 40 eingeführt, welches mittels eines Sprengrings 42 an das Verbindungselement 30 gekoppelt ist. Das Kopplungselement 40 weist ein Innengewinde auf, welches einem Außengewinde der Spindel 21 entspricht, so daß die Spindel 21 in das Kopplungselement 40 eingeschraubt werden kann. Auf diese Weise kann durch Drehung der Spindel 21 um die Spindelachse S eine axiale Bewegung des Kopplungselementes 40 in Richtung der Spindelachse S, und damit auch eine entsprechende axiale Bewegung des Verbindungselementes 30 und der Bauelemente 22 und 24 des Verschlußkolbens 20 erzeugt werden. Dabei kann die Bewegung der Bauelemente 22 und 24 in Richtung der Spindelachse S mit Hilfe von Führungsleisten 22a und 24a, welche in eine Führungsnut 26a in dem Gehäuse 10 eingreifen, geführt werden.

Das Kopplungselement 40 weist eine erste an einer Stirnfläche des Verbindungselementes 30 anliegende und etwa senkrecht zur Spindelachse S verlaufende Anlagefläche 46 sowie eine zweite an dem der Lageranordnung 50 zugewandten Bauelement 24 des Verschlußkolbens 20 anliegende Anlagefläche 44 auf. Mit Hilfe dieser Anlagefläche 44 kann mittels des Kopplungselementes 40 eine in Richtung der Spindelachse wirkende Klemmkraft auf die Bauelemente 22 und 24 des Verschlußkolbens ausgeübt werden, wenn der Verschlußkolben 20 durch Drehung der Spindel um die Spindelachse S in die in Fig. 2 dargestellte Sperrstellung bewegt wird, um so die notwendige Dichtwirkung zu erreichen.

Bei einer Bewegung des Verschlußkolbens 20 von der in Fig. 2 dargestellten Sperrstellung in die Freigabestellung durch Drehung der Spindel 21 um die Spindelachse S führt das an die Spindel 21 gekoppelte Kopplungselement 40 über den Sprengring 42, das Verbindungselement 30 mit, wobei durch Anlage des flanschartig erweiterten Endes 32 des Verbindungselementes 30 auch das der Lageranordnung 50 abgewandte Bauelement 22 des Verschlußkolbens und das an diesem Bauelement 22 anliegende und der Lageranordnung zugewandte Bauelement 24 des Verschlußkolbens 20 mitgeführt wird.

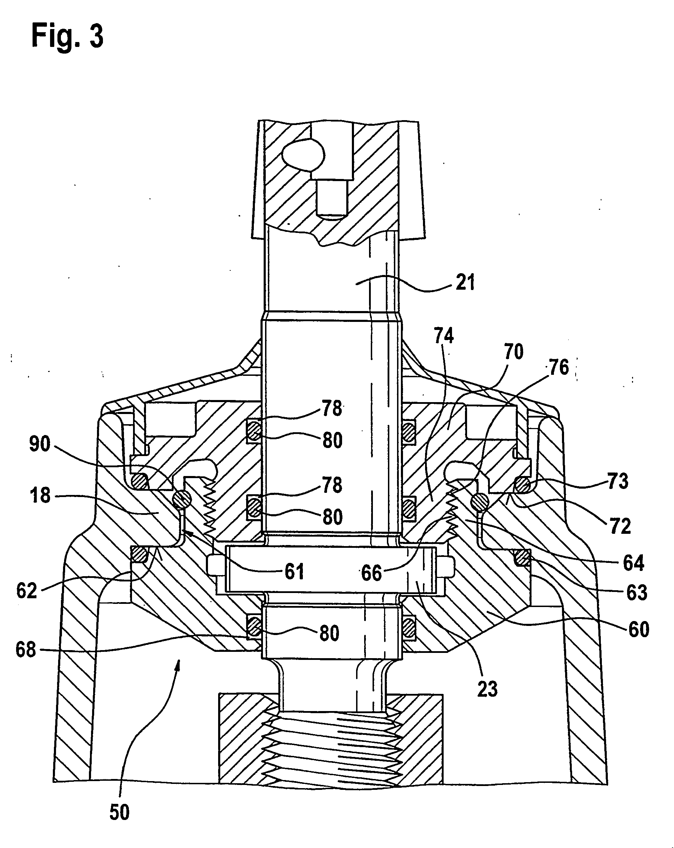

Die in Fig. 3 dargestellte Lageranordnung 50 ist ebenfalls zweiteilig ausgeführt. Dabei weist ein dem Verschlußkolben zugewandtes Bauelement 60 der Lageranordnung 50 eine senkrecht zur Spindelachse S verlaufende Anlagefläche 62 auf, die sich ggf. unter Zwischenschaltung eines in eine radial außen liegende Einbuchtung angelegten Dichtrings 63 an eine Gegenfläche eines die Spindelachse S umlaufenden Haltebundes 18 des Gehäuseansatzes 10 bzw. 16 anlegbar ist. Auch das dem Verschlußkolben abgewandte Bauelement 70 der Lageranordnung weist ein senkrecht zur Spindelachse S verlaufende Anlagefläche 72 auf, welche ggf. unter Zwischenschaltung eines in eine radial außen liegende Einbuchtung eingelegten Dichtrings 73 an eine nach oben weisende Gegenfläche des Haltebundes 18 anlegbar ist. Das Bauelement 60 der Lageranordnung 50 ist bei 61 bezüglich Drehungen um die Spindelachse S verdrehsicher an dem Haltebund 18 des Gehäuseansatzes 10 bzw. 16 gehalten.

Darüber hinaus weist das dem Verschlußkolben 20 zugewandte Bauelement 60 der Lageranordnung 50 eine den Haltebund 18 durchsetzende und von der Spindel 21 durchsetzte mit einem Innengewinde 66 ausgestattete und einstückig mit der entsprechenden Anlagefläche 62 ausgeführte Schraubhülse 64 auf, während das Bauelement 70 eine weitere, den Haltebund 18 durchsetzende und von der Spindel 21 durchsetzte sowie mit einem dem Innengewinde entsprechenden Außengewinde 76 ausgestattete und einstückig mit der entsprechenden Anlagefläche 72 ausgeführte Schraubhülse 74 aufweist. In dem in Fig. 3 dargestellten zusammengeschraubten Zustand der Bauelemente 60 und 70 der Lageranordnung 50 wird von der Lageranordnung 50 einerseits eine nach außen offene, die Spindelachse S umlaufende und den Haltebund 18 des Gehäuseansatzes 10 bzw. 16 aufnehmende Nut begrenzt und andererseits eine die Spindelachse S umlaufende und in Richtung auf die Spindelachse S offene sowie einen einstückig mit der Spindel 21 ausgeführten Lagerbund 23 der Spindel 21 aufnehmende Nut begrenzt.

Die Bauelemente 60 und 70 der Lageranordnung 50 weisen insgesamt drei die Spindelachse umlaufende und in Richtung auf die Spindelachse S offene Nuten 68 bzw. 78 auf, in die an der Spindel 21 anliegende Dichtringe 80 eingelegt sind. Zusätzlich ist dem dem Verschlußkolben 20 zugewandten Bauelement 60 der Lageranordnung 50 auch noch ein Sprengring 90 zugeordnet, mit dem das Bauelement 60 bezüglich Bewegungen in Richtung der Spindelachse S arretiert werden kann, um so die Montage der Lageranordnung zu erleichtern. Zur Montage wird das Bauelement 60 von unten an den Haltebund 18 angelegt und mit Hilfe des Sprengrings 90 in dieser Stellung arretiert. Die Spindel wird eingeschoben. Dann wird das Bauelement 70 der Lageranordnung 50 in das Gewinde 66 der Schraubhülse eingeschraubt, wobei eine Verdrehung des Bauelementes 60 um die Spindelachse 70 bei 61 durch formschlüssige Anlage an dem Haltebund 18 verhindert wird.

Die Erfindung ist nicht auf die anhand der Zeichnung erläuterten Ausführungsbeispiele beschränkt. Beispielsweise ist auch an eine Kombination eines mehrteilig ausgeführten Verschlußkolbens mit einer mehrteilig ausgeführten Lageranordnung gedacht. Darüber hinaus können sowohl der Verschlußkolben als auch die Lageranordnung drei oder mehr Bauelemente aufweisen. Bei allen Ausführungsformen der Erfindung kann das Gehäuse einstückig und/oder unbearbeitet ausgeführt sein. Die Verschlußkolben bzw. einzelne Bauelemente der Verschlußkolben erfindungsgemäßer Absperrschieber können vollständig gummiert ausgeführt sein, um so die gewünschte Dichtwirkung zu verbessern. Außerdem kann der Sprengring 90 durch einen Klebstoff ersetzt werden.

## Patentansprüche

1. Absperrschieber mit einem einen eine Eintrittsöffnung (12) mit einer Austrittsöffnung (14) für ein in einer Strömungsrichtung P strömendes Fluid verbindenden Durchgang (11) aufweisenden Gehäuse (10, 16), insbesondere zumindest teilweise aus Gusseisen, einem zwischen einer Sperrstellung, in der der Durchgang (11) gesperrt ist, und einer Freigabestellung, in der der Durchgang (11) freigegeben ist, bewegbaren Verschlusskolben (20) sowie einer mittels einer Lageranordnung (50) in dem Gehäuse (10, 16) um eine quer zur Strömungsrichtung (P) verlaufende Spindelachse (S) drehbar gelagerten und an den Verschlusskolben (20) koppelbaren Spindel (21), wobei die Lageranordnung (50) mehrteilig ausgeführt ist, **dadurch gekennzeichnet, dass** die Lageranordnung (50) zwei oder mehr in Richtung des Spindelachse (S) derart hintereinander angeordnete Bauelemente (60, 70) aufweist, dass eine senkrecht zur Spindelachse (S) verlaufende und nur eines der Bauelemente schneidende Ebene existiert, und dass die zwei Bauelemente (60, 70) der Lageranordnung (50) jeweils mindestens eine quer zur Spindelachse (S) verlaufende und an eine Gegenfläche (18) des Gehäuses (10, 16) anlegbare Anlagefläche (62, 72) aufweisen, wobei die Anlageflächen (62, 72) der Bauelemente (60, 70) einander zugewandt sind, und dass die zwei Bauelemente (60, 70) zur Befestigung der Lageranordnung (50) an dem Gehäuse (10, 16) die die Gegenflächen aufweisenden Gehäuseteile (18) zwischen den Anlageflächen (62, 72) einklemmen.

2. Absperrschieber nach Anspruch 1, **dadurch gekennzeichnet, dass** die Anlageflächen (62, 72) der Bauelemente (60, 70) etwa senkrecht zur Spindelachse (S) verlaufen.

3. Absperrschieber nach Anspruch 1 oder 2, **dadurch gekennzeichnet, dass** die jeweilige Anlagefläche (62, 72) unter Zwischenschaltung eines Dichtelements (63, 73) an die jeweilige Gegenfläche des Gehäuses (10, 16) anlegbar ist.

4. Absperrschieber nach einem der voranstehenden Ansprüche, **dadurch gekennzeichnet, dass** die Gegenflächen von einem die Spindelachse (S) umlaufenden Haltebund (18) des Gehäuses (10, 16) gebildet sind.

5. Absperrschieber nach einem der voranstehenden Ansprüche, **dadurch gekennzeichnet, dass** mindestens ein Bauelement (60) der Lageranordnung (50) bezüglich Drehungen um die Spindelachse (S) verdrehsicher an dem Gehäuse (10, 16) gehalten ist.

6. Absperrschieber nach einem der voranstehenden Ansprüche, **dadurch gekennzeichnet, dass** mindestens ein Bauelement (60) der Lageranordnung (50), insbesondere das dem Verschlusskolben (20) zugewandte Bauelement (60) der Lageranordnung (50), eine den Haltebund (18) durchsetzende und von der Spindel (21) durchsetzte mit einem Innengewinde ausgestattete, vorzugsweise einstückig mit der entsprechenden Anlagefläche (62) ausgeführte Schraubhülse (64) aufweist und das andere Bauelement (70) eine weitere, den Haltebund (18) durchsetzende und von der Spindel (20) durchsetzte sowie mit einem dem Innengewinde (66) entsprechenden Außengewinde (76) ausgestattete, vorzugsweise einstückig mit der entsprechenden Anlagefläche (72) ausgeführte Schraubhülse (74) aufweist.

7. Absperrschieber nach Anspruch 6, **dadurch gekennzeichnet, dass** die zusammengeschraubten Bauelemente (60, 70) der Lageranordnung (50) einerseits eine nach außen offene, die Spindelachse (S) umlaufende und zum Aufnahmen des Haltebundes (18) ausgelegte Nut begrenzen und andererseits eine die Spindelachse (S) umlaufende und in Richtung auf die Spindelachse (S) offene sowie zum Aufnahmen eines einstückig mit der Spindel (21) ausgeführten Lagerbundes (23) der Spindel ausgelegte weitere Nut begrenzen.

8. Absperrschieber nach einem der voranstehenden Ansprüche, **dadurch gekennzeichnet, dass** mindestens ein Bauelement (60, 70) der Lageranordnung (50) mindestens eine die Spindelachse (S) umlaufende, in Richtung auf die Spindelachse (S) offene und zum Aufnahmen eines an die Spindel (21) anlegbaren Dichtrings (80) ausgelegte Nut (68, 78) aufweist.

9. Absperrschieber nach einem der voranstehenden Ansprüche, **dadurch gekennzeichnet, dass** dem dem Verschlusskolben (20) zugewandten Bauelement (60) der Lageranordnung eine Arretierungseinrichtung, wie etwa ein Sprengring (90) zum Arretieren dieses Bauelementes (60) bezüglich Bewegungen in Richtung der Spindelachse (S) zugeordnet ist.

10. Absperrschieber nach einem der vorhergehenden Ansprüche, **dadurch gekennzeichnet, dass** das Gehäuse (10, 16) einstückig und/oder unbearbeitet ausgeführt ist.

11. Absperrschieber nach einem der voranstehenden Ansprüche, **dadurch gekennzeichnet, dass** der Verschlusskolben (20) zwei oder mehr in Richtung der Spindelachse (S) derart hintereinander angeordnete Bauelemente (22, 24) aufweist, dass eine senkrecht zur Spindelachse (S) verlaufende und nur eines der Bauelemente (20, 24) schneidende Ebene existiert.

12. Absperrschieber nach Anspruch 11, **dadurch gekennzeichnet, dass** die zwei Bauelemente (22, 24) des Verschlusskolbens (20) längs einer senkrecht zur Spindelachse (S) verlaufende Trennebene voneinander getrennt sind.

13. Absperrschieber nach Anspruch 11 oder 12, **dadurch gekennzeichnet, dass** die zwei Bauelemente (22, 24) des Verschlusskolbens (20) von einer ein vorzugsweise hülsenförmiges Verbindungselement (30) aufnehmenden und etwa koaxial zur Spindelachse (S) verlaufenden Ausnehmung durchsetzt sind.

14. Absperrschieber nach Anspruch 13, **dadurch gekennzeichnet, dass** ein Ende, insbesondere das der Lageranordnung (50) zugewandte Ende des Verbindungselementes (30), an die Spindel (21) koppelbar ist.

15. Absperrschieber nach Anspruch 14, **gekennzeichnet durch** ein in die das der Lageranordnung (50) zugewandte Bauelement (24) durchsetzende Ausnehmung einsetzbares und einerseits form- und/oder kraftschlüssig an das Verbindungselement (30) und andererseits form- und/oder kraftschlüssig an die Spindel (21) koppelbares Kopplungselement (40).

16. Absperrschieber nach Anspruch 15, **dadurch gekennzeichnet, dass** das Kopplungselement (40) über einen die Spindelachse (S) umlaufenden Sprengring (42) an das Verbindungselement (30) koppelbar ist.

17. Absperrschieber nach Anspruch 15 oder 16, **dadurch gekennzeichnet, dass** das Kopplungselement (40) ein einem Außengewinde (25) der vorzugsweise in axialer Richtung bezüglich dem Gehäuse (10, 16) feststehend gelagerten Spindel (21) entsprechendes Innengewinde aufweist.

18. Absperrschieber nach einem der Ansprüche 15 bis 17, **dadurch gekennzeichnet, dass** das Kopplungselement (40) mindestens eine an eine Stirnfläche des Verbindungselementes (30) und/oder eine vorzugsweise etwa senkrecht zur Spindelachse (S) verlaufende Begrenzungsfläche des der Lageranordnung zugewandten Bauelementes (24) des Verschlusskolbens (20) anlegbare und vorzugsweise etwa senkrecht zur Spindelachse (S) verlaufende Anlagefläche (44, 46) aufweist.

19. Absperrschieber nach einem der Ansprüche 13 bis 18, **dadurch gekennzeichnet, dass** das der Lageranordnung (50) abgewandte Ende (32) des Verbindungselements (30) flanschartig erweitert und an eine vorzugsweise etwa senkrecht zur Spindelachse (S) verlaufende und der Lageranordnung (50) abgewandte Anlagefläche des der Lageranordnung abgewandten Bauelementes (22) des Verschlusskolbens (20) anlegbar ist.

20. Absperrschieber nach einem der vorhergehenden Ansprüche, **dadurch gekennzeichnet, dass** mindestens ein Bauelement (22, 24) des Verschlusskolbens (20) zumindest teilweise, vorzugsweise vollständig gummiert ist.

## Claims

1. Gate valve with a housing (10, 16) consisting, in particular, at least partially of cast iron and having a passage (11) connecting an inlet opening (12) to an outlet opening (14) for a fluid flowing in a direction of flow P, a closing plunger (20) movable between a shut-off position, the passage (11) being closed in said shut-off position, and a release position, the passage (11) being open in said release position, as well as a spindle (21) mounted in the housing (10, 16) by means of a bearing system (50) so as to be rotatable about a spindle axis (S) extending transversely to the direction of flow (P) and adapted to be coupled to the closing plunger (20), wherein the bearing system (50) is configured in several parts, **characterized in that** the bearing system (50) has two or more components (60, 70) arranged one behind the other in the direction of the spindle axis (S) in such a manner that a plane extending at right angles to the spindle axis (S) and intersecting only one of the components exists, and that the two components (60, 70) of the bearing system (50) each have at least one contact surface (62, 72) extending transversely to the spindle axis (S) and being adapted to abut on an opposite surface (18) of the housing (10, 16), wherein the contact surfaces (62, 72) of the components (60, 70) face one another, and that the two components (60, 70) clamp the housing parts (18) having the opposite surfaces between the contact surfaces (62, 72) for the purpose of securing the bearing system (50) on the housing (10, 16).

2. Gate valve as defined in claim 1, **characterized in that** the contact surfaces (62, 72) of the components (60, 70) extend approximately at right angles to the spindle axis (S).

3. Gate valve as defined in claim 1 or 2, **characterized in that** the respective contact surface (62, 72) is adapted to abut on the respective opposite surface of the housing (10, 16) with a sealing element (63, 73) located therebetween.

4. Gate valve as defined in any one of the preceding claims, **characterized in that** the opposite surfaces are formed by a supporting collar (18) of the housing (10, 16) extending around the spindle axis (S).

5. Gate valve as defined in any one of the preceding claims, **characterized in that** at least one component (60) of the bearing system (50) is held on the housing (10, 16) so as to be secured against rotation with respect to rotations about the spindle axis (S).

6. Gate valve as defined in any one of the preceding claims, **characterized in that** at least one component (60) of the bearing system (50), in particular the component (60) of the bearing system (50) facing the closing plunger (20), has a screw sleeve (64) passing through the supporting collar (18) and having the spindle (21) passing through it, said screw sleeve being provided with an internal thread and preferably being designed in one piece with the corresponding contact surface (62), and the other component (70) has an additional screw sleeve (74) passing through the supporting collar (18) and having the spindle (20) passing through it as well as being provided with an external thread (76) corresponding to the internal thread (66) and preferably being designed in one piece with the corresponding contact surface (72).

7. Gate valve as defined in claim 6, **characterized in that** the components (60, 70) of the bearing system (50) when screwed together limit, on the one hand, a groove configured to accommodate the supporting collar (18), extending around the spindle axis (S) and being open outwardly and, on the other hand, limit an additional groove extending around the spindle axis (S) and being open in the direction towards the spindle axis (S) as well as being configured to accommodate a bearing collar (23) of the spindle designed in one piece with the spindle (21).

8. Gate valve as defined in any one of the preceding claims, **characterized in that** at least one component (60, 70) of the bearing system (50) has at least one groove (68, 78) extending around the spindle axis (S), being open in the direction towards the spindle axis (S) and configured to accommodate a sealing ring (80) adapted to abut on the spindle (21).

9. Gate valve as defined in any one of the preceding claims, **characterized in that** a locking device, such as, for example, a snap ring (90), is associated with the component (60) of the bearing system facing the closing plunger (20) for locking this component (60) with respect to movements in the direction of the spindle axis (S).

10. Gate valve as defined in any one of the preceding claims, **characterized in that** the housing (10, 16) is designed to be in one piece and/or non-machined.

11. Gate valve as defined in any one of the preceding claims, **characterized in that** the closing plunger (20) has two or more components (22, 24) arranged one behind the other in the direction of the spindle axis (S) in such a manner that a plane extending at right angles to the spindle axis (S) and intersecting only one of the components (20, 24) exists.

12. Gate valve as defined in claim 11, **characterized in that** the two components (22, 24) of the closing plunger (20) are separated from one another along a plane of separation extending at right angles to the spindle axis (S).

13. Gate valve as defined in claim 11 or 12, **characterized in that** the two components (22, 24) of the closing plunger (20) are penetrated by a recess accommodating a preferably sleeve-like connecting element (30) and extending approximately coaxially to the spindle axis (S).

14. Gate valve as defined in claim 13, **characterized in that** one end, in particular the end of the connecting element (30) facing the bearing system (50), is adapted to be coupled to the spindle (21).

15. Gate valve as defined in claim 14, **characterized by** a coupling element (40) insertable into the recess penetrating the component (24) facing the bearing system (50) and adapted to be coupled, on the one hand, to the connecting element (30) in a form locking and/or force locking manner and, on the other hand, to the spindle (21) in a form locking and/or force locking manner.

16. Gate valve as defined in claim 15, **characterized in that** the coupling element (40) is adapted to be coupled to the connecting element (30) via a snap ring (42) extending around the spindle axis (S).

17. Gate valve as defined in claim 15 or 16, **characterized in that** the coupling element (40) has an internal thread corresponding to an external thread (25) of the spindle (21) preferably mounted so as to be stationary in axial direction with respect to the housing (10, 16).

18. Gate valve as defined in any one of claims 15 to 17, **characterized in that** the coupling element (40) has at least one contact surface (44, 46) preferably extending approximately at right angles to the spindle axis (S) and adapted to abut on an end surface of the connecting element (30) and/or an area of contact of the component (24) of the closing plunger (20) facing the bearing system, said area of contact preferably extending approximately at right angles to the spindle axis (S).

19. Gate valve as defined in any one of claims 13 to 18, **characterized in that** the end (32) of the connecting element (30) facing away from the bearing system (50) is widened in the form of a flange and adapted to abut on a contact surface of the component (22) of the closing plunger (20) facing away from the bearing system, said contact surface preferably extending approximately at right angles to the spindle axis (S) and facing away from the bearing system (50).

20. Gate valve as defined in any one of the preceding claims, **characterized in that** at least one component (22, 24) of the closing plunger (20) is rubber coated at least partially, preferably completely.

## Revendications

1. Vanne d'arrêt, comportant un carter (10, 16), réalisé en particulier au moins en partie en fonte de moulage et muni d'un conduit (11) reliant une ouverture d'admission (12) avec une ouverture de sortie (14) pour un fluide circulant dans une direction d'écoulement (P), un piston de fermeture (20) mobile entre une position d'arrêt, dans laquelle le conduit (11) est fermé, et une position de déblocage, dans laquelle le conduit (11) est ouvert, ainsi qu'une broche (21), apte à tourner au moyen d'un système de palier (50) dans le carter (10, 16) autour d'un axe de broche (S), orienté transversalement à la direction d'écoulement (P), et propre à être couplée au piston de fermeture (20), ledit système de palier (50) étant réalisé en plusieurs parties, **caractérisée en ce que** le système de palier (50) comporte deux éléments (60, 70) ou plus, disposés les uns derrière les autres dans la direction de l'axe de broche (S), de telle sorte qu'il existe un plan perpendiculaire à l'axe de broche (S) et coupant seulement un des éléments, et **en ce que** les deux éléments (60, 70) du système de palier (50) comportent chacun au moins une surface d'appui (62, 72), orientée transversalement à l'axe de broche (S) et apte à être mise en appui contre une surface complémentaire (18) du carter (10, 16), lesdites surfaces d'appui (62, 72) des éléments (60, 70) étant orientées l'une vers l'autre, et **en ce que** les deux éléments (60, 70), en vue de la fixation du système de palier (50) sur le carter (10, 16), enserrent entre les surfaces d'appui (62, 72) les parties de carter (18), munies des surfaces complémentaires.

2. Vanne d'arrêt selon la revendication 1, **caractérisée en ce que** les surfaces d'appui (62, 72) des éléments (60, 70) sont orientées sensiblement perpendiculairement à l'axe de broche (S).

3. Vanne d'arrêt selon la revendication 1 ou 2, **caractérisée en ce que** chacune des surfaces d'appui (62, 72) peut être mise en appui contre la surface complémentaire respective du carter (10, 16) moyennant le montage intercalé d'un élément d'étanchéité (63, 73).

4. Vanne d'arrêt selon l'une quelconque des revendications précédentes, **caractérisée en ce que** les surfaces complémentaires sont formées par un collet de retenue (18) du carter (10, 16), entourant l'axe de broche (S).

5. Vanne d'arrêt selon l'une quelconque des revendications précédentes, **caractérisée en ce qu'**au moins un élément (60) du système de palier (50) est maintenu immobile en rotation sur le carter (10, 16) par rapport aux rotations autour de l'axe de broche (S).

6. Vanne d'arrêt selon l'une quelconque des revendications précédentes, **caractérisée en ce qu'**au moins un élément (60) du système de palier (50), en particulier l'élément (60), orienté vers le piston de fermeture (20), du système de palier (50), comporte une douille filetée (64), qui passe à travers le collet de retenue (18) et est traversée par la broche (21), et qui est munie d'un filetage intérieur et est réalisée de préférence d'un seul tenant avec la surface d'appui (62) correspondante, et l'autre élément (70) comporte une autre douille filetée (74), qui passe à travers le collet de retenue (18) et est traversée par la broche (21), et qui est munie d'un filetage extérieur (76) correspondant au filetage intérieur (66) et est réalisée de préférence d'un seul tenant avec la surface d'appui (72) correspondante.

7. Vanne d'arrêt selon la revendication 6, **caractérisée en ce que** les éléments (60, 70) du système de palier (50), vissés l'un à l'autre, délimitent, d'une part, une rainure ouverte vers l'extérieur, entourant l'axe de broche (S) et destinée à recevoir le collet de retenue (18), et délimitent, d'autre part, une autre rainure entourant l'axe de broche (S) et ouverte vers l'axe de broche (S) et destinée à recevoir un collet d'appui (23) de la broche, réalisé d'un seul tenant avec la broche (21).

8. Vanne d'arrêt selon l'une quelconque des revendications précédentes, **caractérisée en ce qu'**au moins un élément (60, 70) du système de palier (50) comporte au moins une rainure (68, 78), entourant l'axe de broche (S), ouverte vers l'axe de broche (S) et destinée à recevoir une bague d'étanchéité (80) propre à être mise en appui contre la broche (21).

9. Vanne d'arrêt selon l'une quelconque des revendications précédentes, **caractérisée en ce qu'**à l'élément (60) du système de palier, orienté vers le piston de fermeture (20), est associé un dispositif d'immobilisation, tel qu'un circlips (90) destiné à immobiliser ledit élément (60) pour l'empêcher d'effectuer des mouvements vers l'axe de broche (S).

10. Vanne d'arrêt selon l'une quelconque des revendications précédentes, **caractérisée en ce que** le carter (10, 16) est réalisé d'un seul tenant et/ou est réalisé non usiné.

11. Vanne d'arrêt selon l'une quelconque des revendications précédentes, **caractérisée en ce que** le piston de fermeture (20) comporte deux éléments (22, 24) ou plus, disposés les uns derrière les autres dans la direction de l'axe de broche (S), de telle sorte qu'il existe un plan perpendiculaire à l'axe de broche (S) et coupant seulement un des éléments (22, 24).

12. Vanne d'arrêt selon la revendication 11, **caractérisée en ce que** les deux éléments (22, 24) du piston de fermeture (20) sont séparés l'un de l'autre le long d'un plan de joint perpendiculaire à l'axe de broche (S).

13. Vanne d'arrêt selon la revendication 11 ou 12, **caractérisée en ce que** les deux éléments (22, 24) du piston de fermeture (20) sont traversés par un évidement recevant un élément d'assemblage (30), de préférence en forme de manchon, et s'étendant coaxialement à l'axe de broche (S).

14. Vanne d'arrêt selon la revendication 13, **caractérisée en ce qu'**une extrémité, en particulier l'extrémité de l'élément d'assemblage (30), orientée vers le système de palier (50), peut être couplée à la broche (21).

15. Vanne d'arrêt selon la revendication 14, **caractérisée par** un élément de couplage (40), qui peut être mis en place dans l'évidement traversant l'élément (24) orienté vers le système de palier (50), et qui est propre à être couplé, d'une part, par conjugaison de forme et/ou conjugaison de force avec l'élément d'assemblage (30) et, d'autre part, par conjugaison de forme et/ou conjugaison de force avec la broche (21).

16. Vanne d'arrêt selon la revendication 15, **caractérisée en ce que** l'élément de couplage (40) peut être couplé à l'élément d'assemblage (30) par l'intermédiaire d'un circlips (42) entourant l'axe de broche (S).

17. Vanne d'arrêt selon la revendication 15 ou 16, **caractérisée en ce que** l'élément de couplage (40) comporte un filetage intérieur correspondant à un filetage extérieur (25) de la broche (21) montée fixe de préférence dans la direction axiale par rapport au carter (10, 16).

18. Vanne d'arrêt selon l'une quelconque des revendications 15 à 17, **caractérisée en ce que** l'élément de couplage (40) comporte au moins une surface d'appui (44, 46), qui est orientée de préférence sensiblement perpendiculairement à l'axe de broche (S) et qui est propre à être mise en appui contre une face frontale de l'élément d'assemblage (30) et/ou contre une surface de délimitation, de préférence sensiblement perpendiculaire à l'axe de broche (S), de l'élément (24), orienté vers le système de palier, du piston de fermeture (20).

19. Vanne d'arrêt selon l'une quelconque des revendications 13 à 18, **caractérisée en ce que** l'extrémité (32) de l'élément d'assemblage (30), opposée au système de palier (50), est élargie en forme de collerette et peut être mise en appui contre une surface d'appui, de préférence sensiblement perpendiculaire à l'axe de broche (S) et opposée au système de palier (50), de l'élément (22), opposé au système de palier, du piston de fermeture (20).

20. Vanne d'arrêt selon l'une quelconque des revendications précédentes, **caractérisée en ce qu'**au moins un élément (22, 24) du piston de fermeture (20) est caoutchouté au moins en partie, de préférence en totalité.
